# FASCICULE DE BREVET EUROPEEN

(11) **EP 3 643 681 B1**
(45) Date de publication et mention de la délivrance du brevet: **09.08.2023**
(21) Numéro de dépôt: 19205123.3
(22) Date de dépôt: 24.10.2019
(51) Int. Cl.: C01G 9/02, A01N 43/40, A01N 55/02, C09C 1/36, C09C 1/04, C08K 3/015, A01N 33/12, A01N 59/16, C08G 83/00, C08L 23/10

(54) **ADDITIF D'AUTO-NETTOYAGE DE TAILLE MICROMETRIQUE POUR PIÈCES À BASE DE THERMOPLASTIQUE**
MIKROMETRISCHES SELBSTREINIGENDES ADDITIV FÜR THERMOPLASTISCHE TEILE
MICROMETRIC SIZED SELF-CLEANING ADDITIVE FOR THERMOPLASTIC BASED PARTS

(30) Priorité: 24.10.2018 FR 1859812
(43) Date de publication de la demande: 29.04.2020
(73) Titulaire: Faurecia Intérieur Industrie, 92000 Nanterre (FR)
(72) Inventeur: SANCHEZ GARCIA, Dolores, 46004 VALENCIA (ES)
(74) Mandataire: Lavoix

(56) Documents cités:
- EP-A1- 2 206 429
- EP-B1- 1 554 353
- US-A1- 2006 246 097
- US-A1- 2008 031 832

## Description

La présente invention concerne des additifs qui peuvent être incorporés dans des matériaux, en particulier dans des matrices thermoplastiques, afin de conférer des propriétés autonettoyantes à des pièces produites à partir de ceux-ci, par exemple des pièces utiles en automobile.

Les matériaux composites comprenant une matrice thermoplastique et des additifs dispersés dans celle-ci pour conférer des propriétés au matériau composite sont déjà connus. Par exemple :
- des particules de TiO₂ peuvent être incorporées dans des matériaux composites pour conférer des propriétés photocatalytiques, ou
- des particules de ZnO peuvent être incorporées pour conférer des propriétés antimicrobiennes.

Toutefois, les particules de TiO₂ et de ZnO habituelles sont toxiques à cause de leurs tailles nanométriques. Cette toxicité empêche leur utilisation en tant qu'additifs d'auto-nettoyage.

Il est également connu de EP2206429 une composition antibactérienne comprenant du zinc pyrithione ou un complexe zinc pyrithione/oxyde de zinc avec de l'oxyde de titane hydraté.

Par conséquent, on a besoin d'additifs qui puissent être incorporés dans des matériaux composites pour conférer des propriétés autonettoyantes sans être toxiques.

A cette fin, selon un premier objet, l'invention concerne un procédé pour la préparation de particules P_{µ}, comprenant les étapes consistant à :
a) mélanger :
   - des particules P_{TiO2} comprenant un polymère de polysiloxane comprenant au moins une chaîne de polysiloxane liée de manière covalente à des nanoparticules de TiO₂, lesdites particules P_{TiO2} étant obtenues à partir d'un alcoxysilane et d'un alkoxyde de titane, avec
   - des particules P_{ZnOZnP} comprenant un polymère de polysiloxane comprenant au moins une chaîne de polysiloxane liée de manière covalente à des nanoparticules comprenant un composite de ZnO et de pyrithione de zinc, lesdites particules P_{ZnOZnP} étant obtenues à partir d'un alcoxysilane, d'acétate de zinc et de particules de pyrithione de zinc,
   pour obtenir un mélange,
b) faire passer le mélange sur un tamis pour obtenir des particules P_{µ} ayant une distribution en volume de granulométrie, telle que mesurée par diffraction laser, dans laquelle le diamètre médian en volume D_{v50µ} est de 1,0 à 5,0 µm et le diamètre en volume D_{v10µ} est d'au moins 0,1 µm.

Les différentes particules décrites ici ont des distributions en volume de granulométrie spécifiques, telles que mesurées par diffraction laser, et caractérisées par :
- un diamètre médian Dᵥ₅₀. Le Dᵥ₅₀ est le diamètre qui sépare la distribution avec la moitié au-dessus du volume et la moitié sous ce diamètre,
- un diamètre en volume Dᵥ₁₀. 10 % du volume total des particules sont constitués de particules ayant un diamètre égal ou inférieur à Dᵥ₁₀,
- le diamètre en volume Dᵥ₉₀. 90 % du volume total des particules sont constitués de particules ayant un diamètre égal ou inférieur à Dᵥ₉₀, et/ou
- le diamètre en volume Dᵥ₀₂. 2 % du volume total des particules sont constitués de particules ayant un diamètre égal ou inférieur à Dᵥ₀₂.

Les diamètres des particules sont déterminés par diffraction laser utilisant des particules à l'état solide. On peut utiliser un dispositif Mastersizer 2000.

La référence "µ", "TiO2" ou "ZnOZnP" ajoutée à la fin de Dᵥ₁₀, Dᵥ₅₀ ou Dᵥ₉₀ est ajoutée pour que l'on sache quelles particules sont caractérisées. Par exemple, D_{v50µ} est le diamètre médian en volume Dᵥ₅₀ des particules P_{µ}.

Les particules obtenues P_{µ} ont une distribution en volume de granulométrie spécifique telle que mesurée par diffraction laser.

De préférence, le diamètre médian en volume D_{v50µ} est de 1,5 à 4,0 µm, notamment de 2,0 à 3,0 µm.

De préférence, D_{v10µ} est d'au moins 0,2 µm, notamment d'au moins 0,5 µm, tel qu'au moins 0,7 µm.

Généralement, le diamètre en volume D_{v90µ} est inférieur à 20,0 µm, notamment inférieur à 15,0 µm, tel qu'inférieur à 10,0 µm.

Selon la présente invention, une "microparticule" signifie une particule dont le diamètre moyen, mesuré par diffraction laser, est d'au moins 0,1 µm, tandis qu'une "nanoparticule" signifie une particule dont le diamètre moyen, mesuré par diffraction laser est compris entre 1 et 100 nm. Les particules P_{µ} sont généralement des microparticules.

Les particules P_{µ} avantageusement :
- comprennent des nanoparticules de TiO₂ ou des nanoparticules comprenant un composite de ZnO et de pyrithione de zinc et donc présentent leurs propriétés avantageuses, en particulier des propriétés photocatalytiques, des propriétés antimicrobiennes et des propriétés autonettoyantes,
- ont une taille micrométrique, et donc n'appartiennent pas aux nanoparticules (c'est-à-dire ayant une taille inférieure à 100 nm conformément à la règlementation). Leur toxicité est donc bien inférieure à celle des nanoparticules de TiO₂ ou des nanoparticules de ZnO qu'elles comprennent.

Les particules P_{µ} sont préparées par mélange d'au moins deux types différents de particules, c'est-à-dire au moins de particules P_{TiO2} et de particules P_{ZnOZnP}, qui comprennent tous deux au moins une chaîne de polysiloxane liée de manière covalente à des nanoparticules actives, c'est-à-dire soit des nanoparticules de TiO₂, soit des nanoparticules comprenant un composite de ZnO et de pyrithione de zinc. Les chaînes de polysiloxane agissent comme un support des nanoparticules et permettent l'obtention de particules plus grosses.

Les particules P_{µ} sont notamment préparées à partir de particules P_{TiO2} comprenant un polymère de polysiloxane comprenant au moins une chaîne de polysiloxane liée de manière covalente à des nanoparticules de TiO₂, lesdites particules P_{TiO2} étaient obtenues à partir d'un alcoxysilane et d'un alkoxyde de titane.

L'alcoxysilane utilisé pour la préparation des particules P_{TiO2} répond généralement à la formule (I) suivante :

R¹-Si(OR)₃ (I)

dans laquelle :
- R¹ est choisi parmi un aryle comprenant 5 à 10 atomes, de préférence un groupe phényle, et une chaîne alkyle linéaire, ramifiée ou cyclique comprenant de 2 à 10 atomes de carbone, ladite chaîne alkyle étant éventuellement interrompue par un oxygène et ladite chaîne alkyle et ledit aryle portant au moins un groupe G choisi parmi un halogène, un groupe -NH₂, un groupe -SH, un groupe époxy, un groupe hydroxyle -OH et un groupe méthacrylate -OOC-C(CH₃)=CH₂, et
- R² représente un alkyle comprenant de 1 à 4 atomes de carbone, de préférence un méthyle ou un éthyle.

Le groupe aryle portant un groupe G préféré est bromophényle.

Des exemples d'alcoxysilanes sont les aryl(trialcoxy)silanes, le 3-méthacryloxypropyltriméthoxy-silane, le (aminopropyl)triéthoxysilane, le 3-glycidyl-oxy-propyl-triméthoxysilane, le 3-glycidyl-oxy-propyl-triéthoxysilane, le 3,4-époxy-butyl-triméthoxysilane, le 3,4-époxy-butyl-triéthoxysilane, le 2-(3,4-époxy-cyclohexyl)-éthyl-triméthoxysilane, le 2-(3,4-époxy-cyclohexyl)-éthyl-triéthoxysilane et le 3-mercaptopropyl-triméthoxysilane.

En tant qu'alkoxyde de titane pour la formation des particules P_{TiO2}, on peut utiliser le butoxyde de titane.

Le rapport en poids entre l'alcoxysilane et l'alkoxyde de titane est généralement de 30/70 à 70/30, notamment de 40/60 à 60/40, de préférence d'environ 50/50.

De préférence, les particules P_{TiO2} sont obtenues par réaction d'un alcoxysilane et d'un alkoxyde de titane :
- à une température de 50 à 70°C, et/ou
- dans une solution aqueuse dont le pH est inférieur à 6, de préférence de 3 à 4. La solution aqueuse est de préférence une solution aqueuse d'acide acétique et/ou d'acide sulfurique.

Généralement, dans les particules P_{TiO2}, les nanoparticules de TiO₂ liées à la chaîne de polysiloxane sont auto-assemblées.

Typiquement, les particules P_{µ} sont obtenues à partir de particules P_{TiO2} ayant une distribution en volume de granulométrie, telle que mesurée par diffraction laser, dans laquelle :
- le diamètre médian en volume D_{v50TiO2} est de 0,6 à 12,0 µm, notamment de 2,0 à 10,0 µm, tel que de 4,0 à 8,0 µm, et/ou
- le diamètre en volume D_{v10TiO2} est de 0,1 à 10,0 µm, notamment de 0,3 à 5,0 µm, tel que de 0,5 à 3,0 µm, et/ou
- le diamètre en volume D_{v90TiO2} est de 1,0 à 25,0 µm, notamment de 5,0 à 20,0 µm, tel que de 10,0 à 15,0 µm.

Les particules P_{µ} sont notamment préparées à partir de particules P_{ZnOZnP} comprenant un polymère de polysiloxane comprenant au moins une chaîne de polysiloxane liée de manière covalente à des nanoparticules comprenant un composite de ZnO et de pyrithione de zinc, lesdites particules P_{ZnOZnP} étant obtenues à partir d'un alcoxysilane, d'acétate de zinc et de particules de pyrithione de zinc.

Typiquement, les particules P_{ZnOZnP} sont obtenues à partir d'un procédé comprenant les étapes suivantes :
α) réaction d'un alcoxysilane et d'acétate de zinc, ce par quoi sont obtenues des particules P_{ZnO} qui comprennent un polymère de polysiloxane comprenant au moins une chaîne de polysiloxane liée de manière covalente à des nanoparticules de ZnO,
β) mélange des particules P_{ZnO} obtenues à l'étape α) avec des particules de pyrithione de zinc P_{ZnP}, ce par quoi sont obtenues les particules P_{ZnOZnP}.

L'alcoxysilane utilisé à l'étape α) répond généralement à la formule (I) telle que définie ci-dessus, et est typiquement choisi parmi les alcoxysilanes listés ci-dessus. L'alcoxysilane utilisé à l'étape α) (c'est-à-dire utilisé pour la préparation des particules P_{ZnOZnP}) peut être le même que l'alcoxysilane utilisé pour la préparation des particules P_{TiO2}, ou peut être différent de celui-ci.

L'étape α) est de préférence mise en oeuvre à une température de 50 à 70°C et/ou dans un solvant, tel qu'une solution aqueuse dont le pH est de préférence supérieur à 7, la solution aqueuse comprenant de préférence un alcool, tel que le méthanol. La solution aqueuse est par exemple une solution aqueuse de NaOH.

Généralement, les nanoparticules comprenant un composite de ZnO et de pyrithione de zinc lié à la chaîne de polysiloxane sont auto-assemblées.

Typiquement, les particules P_{µ} sont obtenues à partir de particules P_{ZnOZnP} ayant une distribution en volume de granulométrie, telle que mesurée par diffraction laser, dans laquelle :
- le diamètre médian en volume D_{v50ZnOZnP} est de 0,3 à 10,0 µm, notamment de 1,0 à 7,0 µm, tel que de 2,0 à 6,0 µm, et/ou
- le diamètre en volume D_{v10ZnOZnP} est de 0,1 à 10,0 µm, notamment de 0,3 à 5,0 µm, tel que de 0,5 à 3,0 µm, et/ou
- le diamètre en volume D_{v90ZnOZnP} est de 1,0 à 25,0 µm, notamment de 3,0 à 15,0 µm, tel que de 5,0 à 12,0 µm.

Le procédé pour préparer les particules P_{µ} comprend une étape consistant à mélanger des particules P_{TiO2} avec des particules P_{ZnOZnP}. Toutes les particules comprennent des chaînes de polysiloxane, qui interagissent électrostatiquement entre elles. Ces interactions électrostatiques conduisent à l'agglomération des particules entre elles et à la formation de particules P_{µ}.

De préférence, à l'étape a) du procédé des particules P_{TiO2} et des particules P_{ZnOZnP} sont mélangées en un rapport en poids P_{TiO2}/P_{ZnOZnP} de 100/1 à 1/10, notamment de 50/1 à 1/1, tel que de 20/1 à 5/1, de préférence de 10/1.

L'étape a) du procédé peut comprendre le mélange de particules P_{TiO2} et de particules P_{ZnO} :
- avec d'autres particules, de préférence avec d'autres particules comprenant un polymère de polysiloxane comprenant au moins une chaîne de polysiloxane liée de manière covalente à des groupes chimiques, et/ou
- avec d'autres matériaux comprenant des groupes chimiques,
   où lesdits groupes chimiques confèrent d'autres propriétés avantageuses aux particules P_{µ} obtenues.

Dans un mode de réalisation, ledit groupe chimique peut être un groupe fluoroalkyle, qui confère avantageusement des propriétés hydrophobes aux particules P_{µ}.

Par exemple, à l'étape a) du procédé, des particules P_{F} sont mélangées avec les particules P_{TiO2} et les particules P_{ZnOZnP}, où les particules P_{F} comprennent un polymère de polysiloxane comprenant au moins une chaîne de polysiloxane liée de manière covalente à des groupes fluoroalkyle et à des particules de dioxyde de silicium, lesdites particules P_{F} étant obtenues à partir d'un fluoroalkylalcoxysilane et de nanoparticules de dioxyde de silicium.

Grâce à leur groupe fluoroalkyle, ces particules P_{F} confèrent avantageusement des propriétés hydrophobes aux particules P_{µ}.

Le fluoroalkylalcoxysilane répond de préférence à la formule (II) :

R³-Si(OR⁴)₃ (II)

dans laquelle :
- R³ représente un fluoroalkyle comprenant de 1 à 10 atomes de carbone, de préférence de 2 à 6 atomes de carbone, et
- R⁴ représente un alkyle comprenant de 1 à 4 atomes de carbone, de préférence un méthyle ou un éthyle.

Par exemple, le fluoroalkylalcoxysilane est le triméthoxy(3,3,3-trifluoropropyl)silane.

Typiquement, les particules P_{F} sont obtenues à partir d'un procédé comprenant les étapes suivantes :
α') mise en contact d'une solution de fluoroalkylalcoxysilane dans un solvant avec une dispersion de nanoparticules de dioxyde de silicium dans un solvant, où la solution et/ou la dispersion comprennent un acide,
β') centrifugation du mélange obtenu à l'étape α') et séchage, ce par quoi des particules P_{F} sont obtenues.

De préférence, le solvant de la dispersion et de la solution utilisées à l'étape α') est un alcool, tel que l'éthanol. L'étape α') est généralement mise en oeuvre à une température de 15 à 35°C, de préférence à la température ambiante (20°C). Le pH de l'étape α') est de préférence inférieur à 4, par exemple de 1. L'acide utilisé à l'étape α') est de préférence HCl.

Généralement, le diamètre moyen, tel que mesuré par diffusion de lumière dynamique des particules P_{F}, est de 10 à 100 nm.

De préférence, à l'étape a) du procédé, des particules P_{F} et des particules P_{ZnOZnP} sont mélangées en un rapport en poids P_{F}/P_{ZnOZnP} de 100/1 à 1/10, notamment de 50/1 à 1/1, tel que de 20/1 à 5/1, de préférence de 10/1. Tout spécialement, à l'étape a), le rapport en poids P_{TiO2}/P_{ZnOZnP}/P_{F} est de 10/1/10.

Dans un autre mode de réalisation, ledit groupe chimique peut être un groupe ammonium quaternaire, qui confère avantageusement des propriétés antistatiques aux particules P_{µ}.

Dans un autre mode de réalisation, à l'étape a), une cire est mélangée avec les particules P_{TiO2}, les particules P_{ZnOZnP} et éventuellement les particules P_{F}, où ladite cire comprend des groupes ammonium quaternaire, ladite cire étant obtenue à partir de :
- une amine tertiaire,
- une amine grasse ou un diéthanolamide d'acide gras, et
- un acide gras ou un ester gras.

Des exemples d'amines tertiaires utilisables sont les bis-(hydroxyalkyl)-alkylamines, la N,N'-bis(2-hydroxyéthyl)stéarylamine ; la N,N'-bis[polyoxyéthylène(5)]stéarylamine ; l'oléate de N,N'-2-hydroxyéthyl-stéarylamine ; le stéarate de N,N'-bis[polyoxyéthylène(3)]-octylamine ; le laurate de N,N'-bis[polyoxyéthylène(4)]laurylamine ; la N,N'-bis[polyoxyéthylène(5)]laurylamine ; la N,N'-bis(2-hydroxyéthyl)cétylamine ; la N,N'-bis[polyoxyéthylène(3)]stéarylamine ; la N,N'-bis[polyoxyéthylène(5)]décylamine ; la N,N-bis[polyoxyéthylène(4)]octylamine ; la N,N-bis(2-hydroxyéthyl)dodécylamine ; le stéarate de N,N-bis(2-hydroxyéthyl)stéarylamine ; et l'octoate de N,N-bis[polyoxyéthylène(5)]cétylamine.

Des exemples d'esters gras sont les glycérides, de préférence les monoglycérides, tels que le monostéarate de glycérol.

Un exemple d'acide gras est l'acide oléique.

Des exemples d'amines tertiaires sont les amines d'acides gras éthoxylées.

Un exemple d'amine grasse est l'oléylamine.

Grâce à son groupe ammonium quaternaire, la cire confère avantageusement des propriétés antistatiques aux particules P_{µ}.

De préférence, à l'étape a) du procédé, la cire et les particules P_{ZnOZnP} sont mélangées en un rapport en poids cire/P_{ZnOZnP} de 100/1 à 1/10, notamment de 50/10 à 1/1, tel que de 20/1 à 5/1, de préférence de 10/1, de façon tout spécialement préférée, à l'étape a), le rapport en poids P_{TiO2}/P_{ZnOZnP}/cire est de 10/1/10. Quand il y a aussi mélange de P_{F} à l'étape a) (c'est-à-dire quand P_{TiO2}, P_{ZnOZnP}, P_{F} et la cire sont mélangées à l'étape a)), alors le rapport en poids P_{TiO2}/P_{ZnOZnP}/cire/P_{F} est de préférence de 10/1/10/10.

Le procédé comprend une étape b) consistant à faire passer le mélange obtenu à l'étape a) sur un tamis pour que soient obtenues des particules P_{µ} ayant une distribution en volume de granulométrie, telle que mesurée par diffraction laser, dans laquelle le diamètre médian en volume D_{v50µ} est de 1,0 à 5,0 µm et le diamètre en volume D_{v10µ} est d'au moins 0,1 µm. Cette étape permet d'éliminer les agrégats trop gros. On utilise typiquement un tamis pour une granulométrie d'environ 20 µm.

Le procédé pour la préparation de particules P_{µ} peut comprendre, avant l'étape a) :
- une étape de préparation des particules P_{TiO2} par réaction d'un alcoxysilane et d'un alkoxyde de titane, et/ou
- une étape de préparation des particules P_{ZnOZnP}, comprenant les sous-étapes α) et β) telles que définies ci-dessus, et/ou
- une étape de préparation des particules P_{F} comprenant les sous-étapes α') et β') telles que définies ci-dessus, et/ou
- une étape de préparation de la cire par réaction d'une amine tertiaire, d'une amine grasse ou d'un diéthanolamide d'acide gras et d'un acide gras ou d'un ester gras.

Les modes de réalisation préférés décrits ci-dessus peuvent bien entendu être appliqués.

Selon un deuxième objet, l'invention concerne les particules P_{µ} susceptible d'être obtenues par le procédé défini ci-dessus.

Comme expliqué ci-dessus, ces particules P_{µ} présentent des propriétés photocatalytiques, antimicrobiennes, antibactériennes et autonettoyantes. Les particules P_{µ} confèrent une auto-élimination de la contamination, de la saleté, des germes, des bactéries, des taches, des odeurs, et/ou des composants organiques volatils.

Les propriétés antimicrobiennes et/ou antibactériennes peuvent être mesurées conformément à la norme ISO 4833:2003.

Les propriétés photocatalytiques contre les NOx (gaz polluants) peuvent être mesurées conformément à la norme ISO 22197-1:2007. Les propriétés photocatalytiques contre les taches peuvent être mesurées par application d'agents colorants à la surface des pièces plastiques et par observation de la dégradation de l'agent colorant au cours du temps lors d'une exposition à une irradiation UV, par exemple 476 heures après application.

Ces particules P_{µ} présentent éventuellement des propriétés antistatiques si l'étape a) du procédé implique la cire comprenant des groupes ammonium quaternaire, et/ou des propriétés hydrophobes et lipophobes si l'étape b) du procédé met en jeu les particules P_{F}.

Les propriétés antistatiques peuvent être mesurées conformément à la norme ISO 1853.

Les propriétés hydrophobes peuvent être mesurées par mesure de l'angle de contact de goutte conformément à la norme ISO 8130-11:1997, et les propriétés lipophobes par le plan incliné conformément à la norme ISO 8130-11 :1997.

Selon un troisième objet, l'invention concerne un procédé pour préparer des pièces plastiques, comprenant l'étape de dispersion des particules P_{µ} dans une matrice thermoplastique. Les particules sont incorporées à l'intérieur de la matrice thermoplastique par additivation en masse, qui confère davantage de durabilité qu'un revêtement appliqué sur la pièce thermoplastique. La préparation d'un matériau revêtu nécessite aussi un équipement spécifique pour appliquer le revêtement, tandis que l'additivation en masse peut être mise en oeuvre avec un équipement existant. Le procédé pour la préparation de la pièce plastique est donc meilleur marché et plus facile à mettre en oeuvre que le procédé pour la préparation d'une pièce plastique revêtue d'un revêtement conférant des propriétés autonettoyantes.

Généralement, le rapport entre le poids des particules P_{µ} et le poids de la pièce plastique est de 0,01 à 10 %, notamment de 0,1 à 8 %, de préférence de 0,4 à 5 %.

Selon un quatrième objet, l'invention concerne une pièce plastique comprenant les particules P_{µ} dispersées dans une matrice thermoplastique.

Typiquement, le thermoplastique de la matrice thermoplastique est le polypropylène (PP) ou le poly(chlorure de vinyle) (PVC).

Selon un cinquième objet, l'invention concerne l'utilisation de particules P_{µ} pour conférer des propriétés autonettoyantes et antimicrobiennes à une pièce plastique comprenant une matrice thermoplastique. L'invention concerne aussi un procédé pour conférer des propriétés autonettoyantes et antimicrobiennes à une pièce plastique, comprenant le mélange de particules P_{µ} à un mélange maître comprenant un polymère thermoplastique, et la formation d'une pièce plastique à partir de ceux-ci.

Selon un sixième objet, l'invention concerne l'utilisation de la pièce plastique telle que définie ci-dessus en tant que pièce de garniture intérieure, typiquement une pièce de garniture intérieure d'automobile, notamment une pièce de garniture intérieure de voiture, par exemple en tant que pièce intérieure d'une portière (telle que l'enroulement supérieur d'une portière), le tableau de bord (tel que le revêtement supérieur du tableau de bord), ou le revêtement du dégivreur. L'invention concerne aussi une pièce de garniture intérieure comprenant ou consistant en la pièce plastique telle que définie ci-dessus.

Les exemples ci-dessous illustrent l'invention.

### Exemples

Les mesures DSL ont été effectuées au moyen d'un dispositif Malvern Mastersizer 2000 pour la mesure de Dᵥ par diffraction laser dans les échantillons de poudre. Trois répétitions de chaque échantillon ont été analysées pour assurer que la mesure est correcte et répétitive.

Les mesures XRD ont été effectuées au moyen d'un dispositif Thermo Fisher Scientific, utilisant un échantillon de poudre. Trois répétitions de chaque échantillon ont été analysées pour assurer que la mesure est correcte et répétitive.

Pour l'observation au microscope électronique à balayage (MEB), des échantillons de poudre ont été montés sur des porte-échantillons biseautés et pulvérisés d'Au/Pd sous vide. Des images MEB (Hitachi S4100) ont été prises avec une tension d'accélération de 10 keV.

### Exemple 1 : Préparation de particules P_{µ}

1. Préparation de particules P_{TiO2} comprenant un polymère de polysiloxane comprenant au moins une chaîne de polysiloxane liée de manière covalente à des nanoparticules de TiO₂, lesdites particules P_{TiO2} étant obtenues à partir d'un alcoxysilane et d'un butoxyde de titane

Dans un flacon équipé d'un agitateur magnétique, on ajoute du butoxyde de titane et du 3-mercaptopropyl-triméthoxysilane et on chauffe à 55°C. On agite le mélange pendant 10 minutes pour atteindre une homogénéisation complète. On ajoute goutte à goutte une solution préparée à partir d'acide acétique et d'acide sulfurique (50 % en poids / 50 % en poids), et on chauffe le mélange à 55°C et on l'agite pendant 2 heures. On observe l'apparition d'un précipité blanc. On le laisse ensuite reposer pendant 2 heures pour achever la formation du précipité, que l'on filtre ensuite sous vide, lave plusieurs fois à l'éthanol, et sèche à 90°C. Finalement, pour obtenir la structure cristalline souhaitée, on soumet le solide à un traitement de broyage à la température ambiante (20°C) avec un équipement de broyage électronique de café et on le chauffe pendant 2 heures dans un four à moufle à 500°C. On obtient un solide blanc constitué des particules P_{TiO2}.

Dans les particules P_{TiO2} obtenues, les particules de TiO₂ sont assemblées et liées de manière covalente à la chaîne de polysiloxane.

La taille de ses particules, mesurée par DLS, est située dans la plage allant de 20,5 à 26,4 nm, et la granulométrie moyenne de 22,8 nm.

Conformément au schéma de diffraction obtenu par XRD, les particules obtenues correspondent principalement à la structure cristalline d'anatase de TiO₂.

La distribution en volume de granulométrie, telle que mesurée par diffraction laser (analyse à l'état solide) au moyen d'un Mastersizer 2000 (permettant de mesurer une granulométrie de 2 nm à 2000 µm) est présentée dans le Tableau 1.

**Tableau 1**

| Distribution en volume de granulométrie de P_{TiO2} telle que mesurée au moyen d'un Mastersizer 2000 (moyenne de 3 mesures avec 5 g de particules P_{TiO2} par mesure) | | | | |
|---|---|---|---|---|
| P_{TiO2} | D_{v02TiO2} | D_{v10TiO2} | D_{v50TiO2} | D_{v90TiO2} |
| Taille | 0,685 ± 0,01 µm | 1,35 ± 0,02 µm | 5,96 ± 0,42 µm | 12,81 ± 0,51 µm |

2. Préparation de particules P_{ZnOZnP} comprenant un polymère de polysiloxane comprenant au moins une chaîne de polysiloxane liée de manière covalente à des particules de ZnO, lesdites particules P_{ZnOZnP} étant obtenues à partir d'un alcoxysilane, d'acétate de zinc et de particules de pyrithione de zinc

### α) Préparation de particules P_{ZnO}

On dissout de l'acétate de zinc dihydraté dans la quantité minimale de méthanol dans un flacon équipé d'un agitateur magnétique, et on chauffe à 50°C. On ajoute du 3-méthacryloxypropyltriméthoxysilane avec un rapport en poids 3-méthacryloxypropyltriméthoxysilane/acétate de zinc de 5 à 10 % en poids. Après retour à la température ambiante (25°C), on ajoute une solution aqueuse de NaOH 0,02 M, préalablement chauffée à 60°C. On agite le mélange et on le refroidit jusqu'à apparition d'un solide blanc.

### β) Mélange des particules P_{ZnO} obtenues à l'étape α) avec des particules de pyrithione de zinc P_{ZnP}

### β1) Préparation des particules de pyrithione de zinc P_{ZnP}

On obtient des particules de pyrithione de zinc en broyant de la pyrithione de zinc au moyen d'un foret à 740 t/min puis en les faisant passer sur un tamis de 100 micromètres.

### β2) Dispersion et support

On mélange les particules P_{ZnO} obtenues à l'étape α) et les particules de pyrithione de zinc P_{ZnP} obtenues à l'étape β1), afin de supporter les particules P_{ZnP} et les particules P_{ZnO} et d'obtenir des particules P_{ZnOZnP} comprenant un polymère de polysiloxane comprenant au moins une chaîne de polysiloxane liée de manière covalente à des nanoparticules comprenant un composite de ZnO et de pyrithione de zinc.

Dans les particules P_{ZnOZnP} obtenues, les nanoparticules comprenant un composite de ZnO et de pyrithione de zinc sont assemblées et liées de manière covalente à la chaîne de polysiloxane.

La distribution en volume des particules P_{ZnO} obtenues, telle que mesurée par DLS, est bimodale, avec une population majeure entre 159,6 nm et 200,1 nm ; et avec une granulométrie moyenne de 200,3 nm.

La distribution en volume de granulométrie, telle que mesurée par diffraction laser (analyse à l'état solide) au moyen d'un Mastersizer 2000 (permettant de mesurer une granulométrie de 2 nm à 2000 µm) est présentée dans le Tableau 2.

**Tableau 2**

| Distribution en volume de granulométrie de P_{ZnOZnP} telle que mesurée au moyen d'un Mastersizer 2000 (moyenne de 3 mesures avec 5 g de particules P_{ZnOZnP} par mesure) | | | | |
|---|---|---|---|---|
| P_{ZnOZnP} | D_{v02ZnOZnP} | D_{v10ZnOZnP} | D_{v50ZnOZnP} | D_{v90ZnOZnP} |
| Taille | 0,364 ± 0,005 µm | 1,34 ± 0,02 µm | 3,85 ± 0,08 µm | 8,56 ± 0,34 µm |

3. Préparation de particules P_{F} comprenant un polymère de polysiloxane comprenant au moins une chaîne de polysiloxane liée de manière covalente à des groupes fluoroalkyle et à des particules de SiO₂, ledit polymère de polysiloxane étant obtenu à partir de F₃C-(CH₂)₂Si(OMe)₃ et de particules de dioxyde de silicium

### Etape α')

On disperse des nanoparticules de SiO₂ dans de l'éthanol dans un bêcher immergé dans un bain à ultrasons pendant 15 minutes. Par ailleurs, on prépare une solution de F₃C-(CH₂)₂Si(OMe)₃ dans de l'éthanol et on ajuste son pH à 1 avec de l'acide chlorhydrique (HCl), ce qui donne un hydrolysat de fluorosilane que l'on ajoute goutte à goutte dans les nanoparticules de SiO₂ dispersées. On laisse le mélange sous agitation pendant 18 heures dans l'obscurité à la température ambiante (25°C).

### Etape β')

On centrifuge le mélange obtenu à 8000 t/min et on le lave plusieurs fois à l'éthanol. On sèche le solide blanc obtenu, constitué de particules P_{F}, dans un four à 60°C pendant 24 heures.

Dans les particules P_{F} obtenues, les particules de SiO₂ sont assemblées et liées de manière covalente à la chaîne de polysiloxane. La chaîne fluoro F₃C-(CH₂)₂- est également liée de manière covalente à la chaîne de polysiloxane.

### 4. Préparation de cire comprenant des groupes ammonium quaternaire comprenant un composé comprenant un groupe ammonium quaternaire, ledit composé étant obtenu à partir d'une amine tertiaire, d'oléylamine et d'un acide oléique

Dans un flacon équipé d'un agitateur magnétique, à un mélange d'amines tertiaires choisies parmi les bis-(hydroxyalkyl)-alkylamines, la N,N'-bis(2-hydroxyéthyl)stéarylamine ; la N,N'-bis[polyoxyéthylène(5)]stéarylamine ; l'oléate de N,N'-2-hydroxyéthyl-stéarylamine ; le stéarate de N,N'-bis[polyoxyéthylène(3)]-octylamine ; le laurate de N,N'-bis[polyoxyéthylène(4)]laurylamine ; la N,N'-bis[polyoxyéthylène(5)]laurylamine ; la N,N'-bis(2-hydroxyéthyl)cétylamine ; la N,N'-bis[polyoxyéthylène(3)]stéarylamine ; la N,N'-bis[polyoxyéthylène(5)]décylamine ; la N,N-bis[polyoxyéthylène(4)]octylamine ; la N,N-bis(2-hydroxyéthyl)dodécylamine ; le stéarate de N,N-bis(2-hydroxyéthyl)stéarylamine ; et l'octoate de N,N-bis[polyoxyéthylène(5)]cétylamine, on ajoute du toluène, de l'acide oléique et de l'oléylamine. On disperse le mélange résultant aux ultrasons pendant 50 minutes. Puis on lave le mélange plusieurs fois avec du toluène, de l'éthanol et de l'eau. Finalement, on concentre le mélange par ultracentrifugation à 8000 t/min et on obtient une cire.

### 5. Préparation de particules P_{µ}(a) à partir de particules P_{TiO2}, P_{ZnOZnP} et P_{F}

On mélange des particules P_{TiO2}, P_{ZnOZnP} et P_{F} obtenues au préalable en un rapport en poids respectif de 10/1/10 dans un broyeur en dispersion afin d'obtenir un mélange homogène. On fait ensuite passer le mélange sur un tamis pour obtenir une poudre blanche homogène constituée des particules P_{µ}(a).

La distribution de taille des particules Pᵤ(a), telle que mesurée par DLS, est située dans la plage comprise entre 1108,2 nm et 1501,1 nm, leur taille moyenne étant de 1246,5 nm.

La distribution en volume de granulométrie, telle que mesurée par diffraction laser (analyse à l'état solide) au moyen d'un Mastersizer 2000 (permettant de mesurer une granulométrie de 2 nm à 2000 µm) est présentée dans le Tableau 3.

**Tableau 3**

| Distribution en volume de granulométrie de Pᵤ(a) telle que mesurée au moyen d'un Mastersizer 2000 (moyenne de 3 mesures avec 5 g de particules P_{TiO2} par mesure) | | | | |
|---|---|---|---|---|
| P_{µ}(a) | D_{v02µ} | D_{v10µ} | D_{V50µ} | D_{V90µ} |
| Taille (µm) | 0,407 ± 0,0001 µm | 0,760 ± 0,0002 µm | 2,73 ± 0,014 µm | 8,09 ± 0,085 µm |

Les images obtenues par XRD montrent que les particules P_{µ}(a) sont composées d'un mélange de particules P_{TiO2}, P_{ZnOZnP} et P_{F}.

### 6. Préparation de particules P_{µ}(b) à partir de particules P_{TiO2}, P_{ZnOZnP} et de cire

On mélange les particules P_{TiO2}, P_{ZnOZnP} et la cire obtenues au préalable en un rapport en poids respectif de 10/1/10 dans un broyeur en dispersion afin d'obtenir un mélange homogène. On fait ensuite passer le mélange sur un tamis pour obtenir une poudre blanche homogène constituée des particules P_{µ}(b).

La distribution de taille des particules P_{µ}(b), telle que mesurée par DLS, est située dans la plage comprise entre 882,6 nm et 9269,5 nm, leur taille moyenne étant de 1200 nm. La distribution en volume de granulométrie, telle que mesurée par diffraction laser (analyse à l'état solide) au moyen d'un Mastersizer 2000 (permettant de mesurer une granulométrie de 2 nm à 2000 µm) est présentée dans le Tableau 4.

**Tableau 4**

| Distribution en volume de granulométrie de P_{µ}(b) telle que mesurée au moyen d'un Mastersizer 2000 (moyenne de 3 mesures avec 5 g de particules P_{TiO2} par mesure) | | | | |
|---|---|---|---|---|
| P_{µ}(b) | D_{v02µ} | D_{v10µ} | D_{v50µ} | D_{v90µ} |
| Taille (µm) | 0,407 ± 0,0001 | 0,760 ± 0,0002 | 2,73 ± 0,014 | 8,09 ± 0,085 |

Les images obtenues par XRD montrent que les particules P_{µ}(b) sont composées d'un mélange de particules P_{TiO2}, P_{ZnOZnP} et de cire.

### Exemple 2 : Préparation de pièces plastiques comprenant les particules P_{µ}(a) obtenues à partir de particules P_{TiO2}, P_{ZnOZnP} et P_{F}, lesdites particules P_{µ}(a) étant dispersées dans une matrice de polypropylène

### 1. Préparation des mélanges maîtres et des pièces plastiques

On prépare quatre mélanges maîtres à partir de PP (qualité INISHAPE^{™} with talc référence CTE9Z) et à partir de particules P_{µ}(a) de l'Exemple 1.5, en les proportions en poids telles qu'indiquées dans le Tableau 5.

**Tableau 5**

| Proportions en poids des particules P_{µ}(a) et du PP dans les mélanges maîtres | | | | |
|---|---|---|---|---|
| | Mélange maître 1 | Mélange maître 2 | Mélange maître 3 | Mélange maître 4 |
| P_{µ}(a) de l'Exemple 1.5 | 2,1 | 1,05 | 0,55 | 10,50 |
| PP | 97,9 | 98,95 | 99,45 | 89,5 |

On effectue la préparation des mélanges maîtres dans une extrudeuse DL/30 avec une température d'entrée de 160°C et une température de test de 190°C. L'extrudeuse permet l'obtention de mélanges de 5 kg avec une technologie de broches aisément interchangeables, améliorant la dispersion.

On prépare par injection des plaquettes de différentes dimensions 10x10 cm, plaques A-4 et dimensions standard pour les propriétés mécaniques, et on effectue les tests au moyen d'une machine d'injecteur.

### 2. Propriété antimicrobienne - Détermination par inhibition de halo (cm) conformément à la norme ISO 4833:2003.

### Conditions de culture microbiologique :

- Milieux de culture : PCA : procédés standard (ALPHA), gélose (ISO 4833:2003)
- Bactéries inoculées : *Escherichia coli,* ATCC 8739
- Concentration de bactéricide : des étalons McFarland 0.5 ont été utilisés en tant que référence.
- Equivalent à 1.5 • 108 CFU/ml
- Taille des échantillons : 2x2 cm de la pièce plastique obtenue (obtenue à partir du mélange maître 1 - comprenant des particules P_{µ}(a)). Une fois que le milieu de culture dans la boîte de Pétri a été inoculé avec les bactéries, on place l'échantillon au milieu de la boîte de Pétri pour étudier ses propriétés bactéricides.
- Température d'incubation : 24 h d'incubation à 37°C

On observe un halo autour de la pièce plastique dans la boîte de Pétri.

A titre de comparaison, on reproduit l'expérience avec une pièce plastique constituée de PP (sans particules P_{µ}(a)). On n'observe pas de halo dans cette expérience.

### 3. Propriétés antibactériennes : détermination de CFU/ml. Compte microbien conformément à la norme ISO 4833:2003

Les résultats sont présentés dans le Tableau 6.

**Tableau 6**

| Propriétés antibactériennes de pièces plastiques comprenant P_{µ}(a) ou exemptes de celles-ci. Détermination de CFU/ml conformément à la norme ISO 4833:2003 | | | | | |
|---|---|---|---|---|---|
| Pièce plastique | Milieu de culture | Détection | Incubation | Résultats d'inoculation par contact | Compte microbien approximatif |
| Sans P_{µ} (témoin) | Gélose VRB | Bactéries appartenant à *Entero-bacteriaceae* | 35-37°C, 24 h | Les bactéries appartenant à *Entero-bacteriaceace* ont crû sous la forme de colonies rouges | 10E3 cfu/ml |
| Obtenue à partir du mélange maître 1 - comprenant P_{µ}(a) (invention) | | | | Pas de colonies | Non observé |
| Sans P_{µ} (témoin) | Aspect de gélose Baird Parker | Bactéries appartenant à *Staphylococcus Aureus* | 35-37°C, 24 h | Les bactéries appartenant à *Staphylococcus Aureus* ont crû sous la forme d'une zone limpide brillante gris-noir dans la gélose autour des colonies | 10E3 cfu/ml |
| Obtenue à partir du mélange maître 1 - comprenant P_{µ}(a) (invention) | | | | Pas de colonies | Non observé |

### 4. Propriétés antistatiques : détermination conformément à la norme ISO 1853 (250 V)

On maintient des plaquettes de 5 × 11 × 0,2 cm de la pièce plastique obtenue sous une humidité contrôlée de 30 % pendant un minimum de 8 heures avant la réalisation de la mesure. Les résultats sont présentés dans le Tableau 7.

### Conditions de l'essai :

- Surface de mesure avec des électrodes en cuivre de 3 cm² espacées de 1 cm. Une différence de potentiel de 100 V est appliquée entre les deux plaques
- Humidité ambiante : 35 %
- Temps de l'essai : 10 secondes
- Dispositif METRISO 2000

**Tableau 7**

| Résistance des pièces plastiques | |
|---|---|
| | Résistance (Ohm) |
| Pièce plastique | 250 V |
| sans P_{µ} (témoin) | 5 E11 Ω |
| comprenant P_{µ}(a) (invention) | 5 E10 Ω |

### 5. Propriétés photocatalytique contre les gaz polluants : analyse des NOx conformément à la norme AC32M ISO 22197-1/2007

### Conditions de l'essai :

• ISO 22197-1/2007
• Analyseur Environnement AC32M
• Lampe : Osram Ultra Vitalux UV-A 300 W
• Eprouvette : 5 cm × 12,5 cm
• Concentration de NO : 700-800 ppb
• Irradiation UV (300-400 nm) 9-10 W/m²

Les résultats sont présentés dans le Tableau 8.

**Tableau 8**

| Propriétés photocatalytiques contre les NOx | | | |
|---|---|---|---|
| Pièce plastique | Concentration de NO (ppb) | | |
| | 0 min | 20 min | 60 min |
| Sans P_{µ} témoin | 750 | 743 | 741 |
| Obtenue à partir du mélange maître 1 Comprenant P_{µ}(a) (invention) | 750 | 670 | 659 |

La pièce plastique obtenue à partir du mélange maître 1 comprenant des particules P_{µ}(a) dégrade et réduit les composés organiques gazeux (NO) jusqu'à 20 % durant 60 minutes d'exposition à la lumière du soleil.

### 6. Propriétés photocatalytiques contre les taches solides et liquides

On applique différents agents colorants sur la surface de la pièce plastique comprenant les particules P_{µ}(a) et on les laisse pendant 456 heures. Le Tableau 9 liste les différents agents colorants et résume si une tache a été ou non observée sur la surface de la pièce plastique au bout de 456 heures.

**Tableau 9**

| Propriétés photocatalytiques contre les taches solides et liquides des pièces plastiques | |
|---|---|
| Agent colorant | Tache observée |
| Colorant (colorant alimentaire) | Non |
| Chocolat (chocolat Lindt) | Oui |
| Ketchup (ketchup Heinz) | Non |
| Stylo plume (marqueur permanent Edding) | Non |
| Rouge à lèvres rouge (L'Oréal) | Oui |
| Maquillage (L'Oréal) | Oui |
| Crème solaire (Nivea SPF 30) | Non |
| Coca (Coca-cola) | Non |
| Café (Nespresso soluble) | Non |

Ces résultats démontrent que le colorant, le ketchup, le stylo plume, la crème solaire, le café et le coca sont fortement dégradés. On n'observe qu'une dégradation partielle du rouge à lèvres rouge, du maquillage et du chocolat.

L'activité photocatalytique de la pièce plastique obtenue à partir du mélange maître 1 comprenant les particules P_{µ}(a) est donc validée pendant 456 heures (19 jours) d'irradiation UV.

### 7. Propriétés hydrophobes et oléophobes : angle de contact de goutte conformément à la norme ISO 8130-11:1997 / plan incliné conformément à la norme ISO 8130-11:1997

Les résultats sont présentés dans le Tableau 10.

**Tableau 10**

| Propriétés hydrophobes et lipophobes des pièces plastiques | | | |
|---|---|---|---|
| PROPRIETES HYDROPHOBES | | | |
| Pièce plastique | | Angle de goutte (°) | |
| Sans P_{µ} (témoin) | | 79,13 | |
| Comprenant P_{µ}(a) (invention) | | 85,56 | |

| PROPRIETES OLEOPHOBES | | | |
|---|---|---|---|
| Pièce plastique | Angle (degrés) | | Temps moyen (s) |
| Sans P_{µ} (témoin) | 34º | | 13,7 |
| Comprenant P_{µ}(a) (invention) | | | 10,5 |

La pièce plastique obtenue à partir du mélange maître 1 et donc comprenant Pᵤ(a) présente un angle de contact supérieur à celui de la pièce plastique exempte de P_{µ}, et donc le caractère hydrophobe de la pièce comprenant Pᵤ(a) est plus important. La pièce plastique obtenue à partir du mélange maître 1 et donc comprenant Pᵤ(a) présente un temps moindre, pour la même distance, que la pièce plastique exempte de P_{µ}, et donc le caractère lipophobe de la pièce comprenant Pᵤ(a) est plus important. Le Tableau 11 résume les propriétés et l'influence de la proportion des particules P_{µ}(a).

**Tableau 11**

| Résumé des propriétés et de l'influence de la proportion des particules P_{µ}(a) | | | | |
|---|---|---|---|---|
| Pièce plastique comprenant P_{µ}(a) | Obtenue à partir du mélange maître 1 | Obtenue à partir du mélange maître 2 | Obtenue à partir du mélange maître 3 | Obtenue à partir du mélange maître 4 |
| Quantité de P_{µ}(a) dans la pièce plastique | 2,10 % | 1,05 % | 0,55 % | 10,50 % |
| Antimicrobien | 2 | 3 | 3 | 1 |
| Photocatalytique | 2 | 3 | 4 | 1 |
| Hydro-/lipophobe | 1 | 2 | 2 | 1 |
| Coût | 3 | 2 | 1 | 4 |

*La propriété est d'autant moins bonne que la valeur est élevée. Les valeurs indiquées dans le tableau sont illustratives uniquement et présentées pour comparer les quatre pièces plastiques.*

### Exemple 3

### Préparation de pièces plastiques comprenant les particules P_{µ}(b) obtenues à partir de particules P_{TiO2}, P_{ZnOZnP} et de cire, lesdites particules P_{µ}(b) étant dispersées dans une matrice de polypropylène

### 8. Préparation des mélanges maîtres et des pièces plastiques

On prépare un mélange maître à partir de PP (qualité INISHAPE^{™} de référence talc. CTE9Z) et à partir de particules P_{µ}(b) de l'Exemple 1.6, en les proportions en poids telles qu'indiquées dans le Tableau 12.

**Tableau 12**

| Proportions en poids des particules P_{µ}(b) et du PP dans le mélange maître 5 | |
|---|---|
| | Mélange maître 5 |
| P_{µ}(b) de l'Exemple 1.6 | 2,1 |
| PP | 97,9 |

On effectue la préparation du mélange maître dans une extrudeuse DL/30 avec une température d'entrée de 160°C et une température de test de 190°C. L'extrudeuse permet l'obtention de mélanges de 5 kg avec une technologie de broches aisément interchangeables, améliorant la dispersion.

On prépare par injection des plaquettes de différentes dimensions 10x10 cm, plaques A-4 et dimensions standard pour les propriétés mécaniques, et on effectue les tests au moyen d'une machine d'injecteur.

### 9. Validations des tests conformément aux normes utilisées par les fabricants d'automobiles

Les résultats sont présentés dans le Tableau 13.

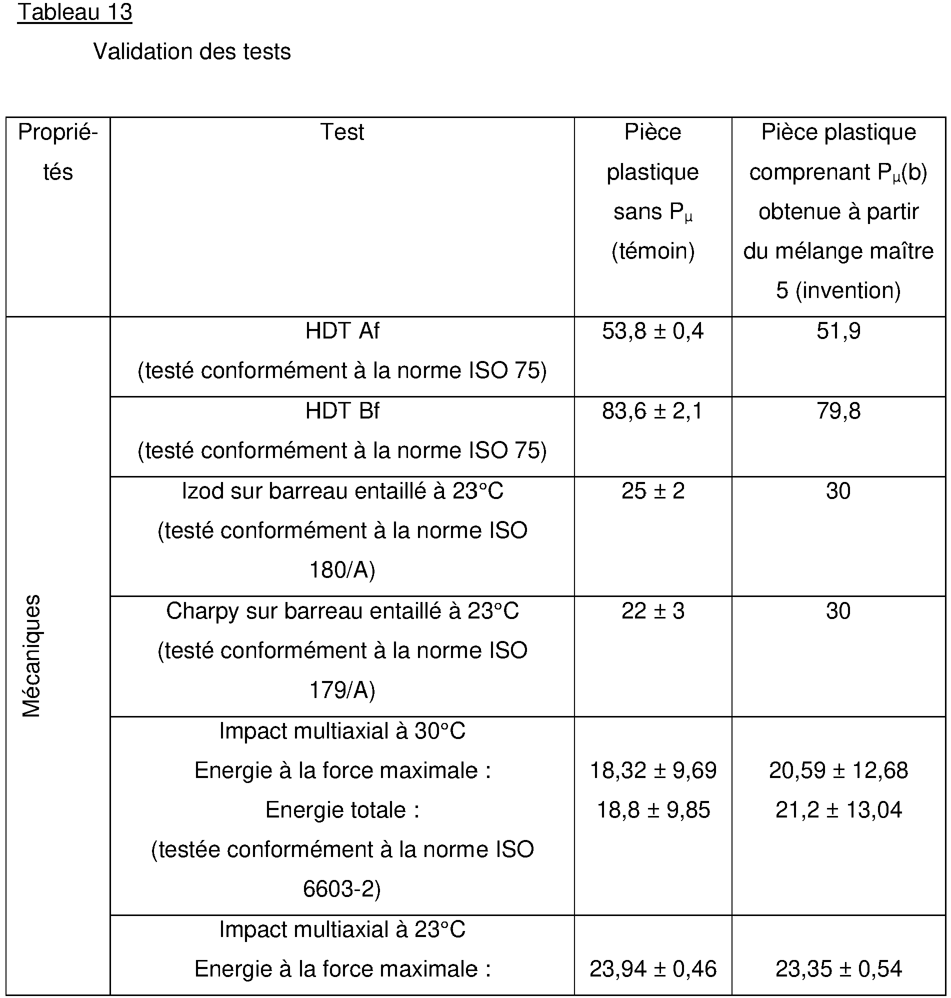

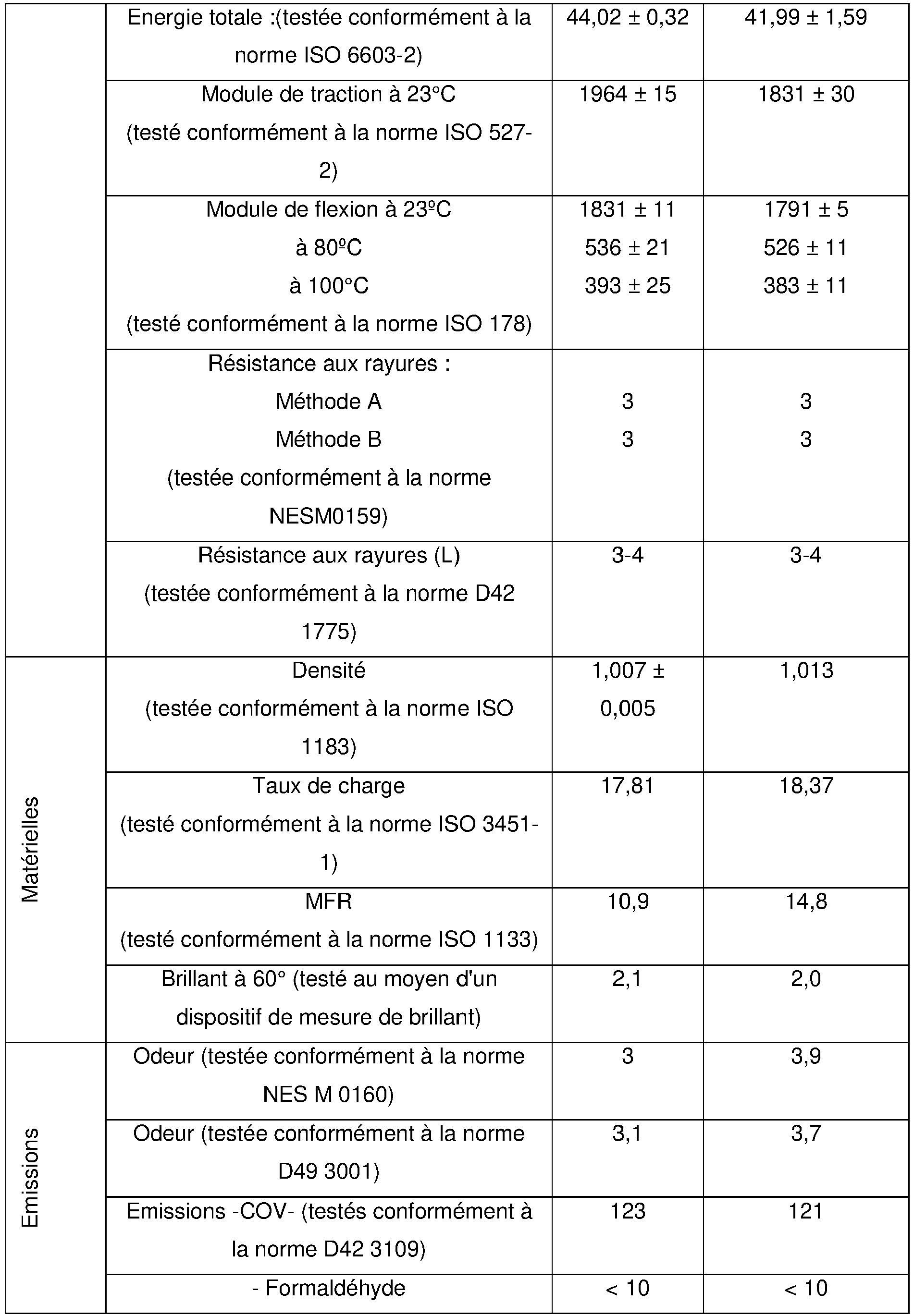

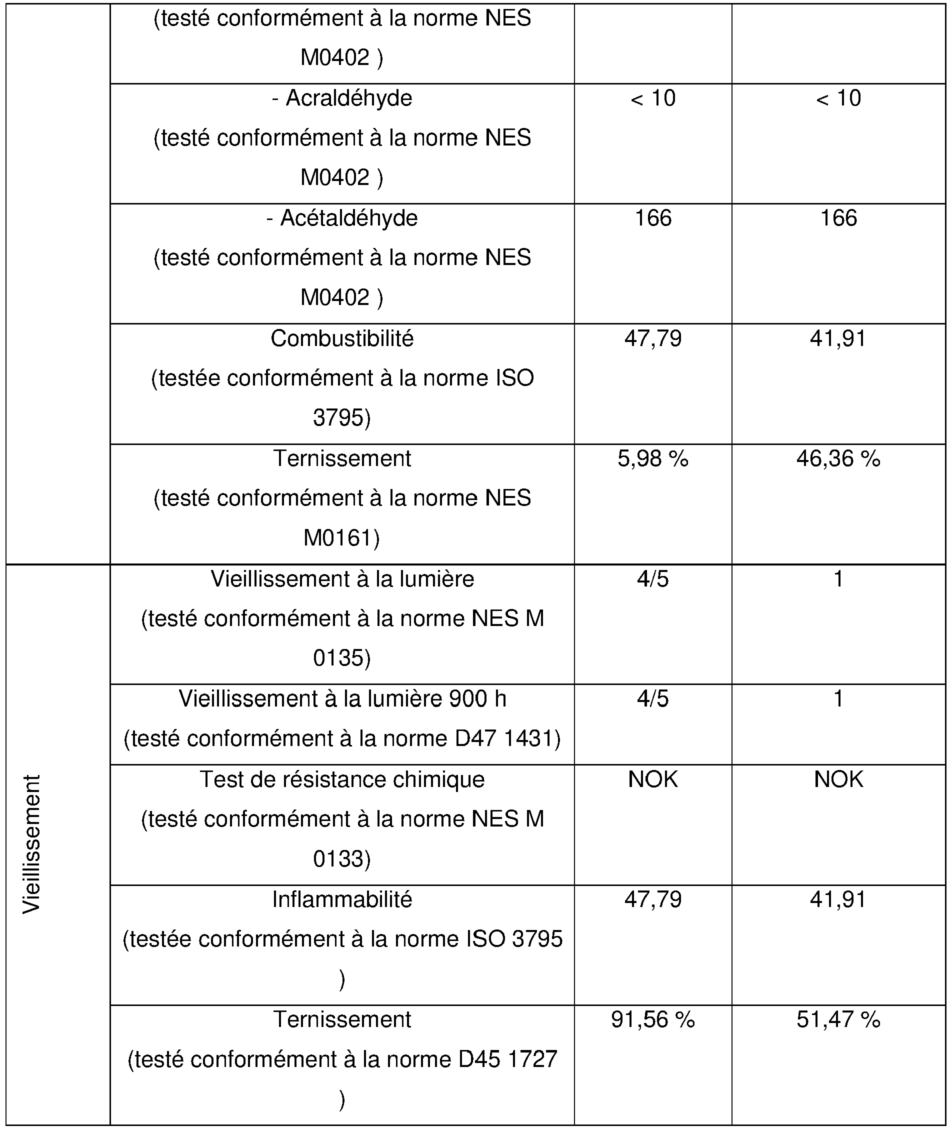

## Revendications

1. Procédé pour la préparation de particules P_{µ} comprenant les étapes consistant à :
a) mélanger :
- des particules P_{TiO2} comprenant un polymère de polysiloxane comprenant au moins une chaîne de polysiloxane liée de manière covalente à des nanoparticules de TiO₂, lesdites particules P_{TiO2} étant obtenues à partir d'un alcoxysilane et d'un alkoxyde de titane, avec
- des particules P_{ZnOZnP} comprenant un polymère de polysiloxane comprenant au moins une chaîne de polysiloxane liée de manière covalente à des nanoparticules comprenant un composite de ZnO et de pyrithione de zinc, lesdites particules P_{ZnOZnP} étant obtenues à partir d'un alcoxysilane, d'acétate de zinc et de particules de pyrithione de zinc,
pour obtenir un mélange,
b) faire passer le mélange sur un tamis pour obtenir des particules P_{µ} ayant une distribution en volume de granulométrie, telle que mesurée par diffraction laser, dans laquelle le diamètre médian en volume D_{v50µ} est de 1,0 à 5,0 µm et le diamètre en volume D_{v10µ} est d'au moins 0,1 µm.

2. Procédé selon la revendication 1, dans lequel, à l'étape a), des particules P_{F} sont mélangées avec les particules P_{TiO2} et les particules P_{ZnOZnP}, et dans lequel les particules P_{F} comprennent un polymère de polysiloxane comprenant au moins une chaîne de polysiloxane liée de manière covalente à des groupes fluoroalkyle et à des particules de dioxyde de silicium, lesdites particules P_{F} étant obtenues à partir d'un fluoroalkylalcoxysilane et de nanoparticules de dioxyde de silicium.

3. Procédé selon la revendication 1 ou 2, dans lequel :
- le diamètre en volume médian D_{v50TiO2}, tel que mesuré par diffraction laser des particules P_{TiO2} utilisées à l'étape a), est de 0,6 à 12,0 µm, notamment de 2,0 à 10,0 µm, tel que de 4,0 à 8,0 µm, et/ou
- le diamètre en volume médian D_{v50ZnOZnP}, tel que mesuré par diffraction laser des particules P_{ZnOZnP} utilisées à l'étape a), est de 0,3 à 10,0 µm, notamment de 1,0 à 7,0 µm, tel que de 2,0 à 6,0 µm, et/ou
- le diamètre moyen, tel que mesuré par diffusion de lumière dynamique des particules P_{F} éventuellement utilisées à l'étape a), est de 10 à 100 nm.

4. Procédé selon l'une quelconque des revendications 1 à 3, dans lequel les particules P_{TiO2} et/ou les particules P_{ZnOZnP} sont obtenues à partir d'un alcoxysilane de formule (I) :
R¹-Si(OR)₃ (I)
dans laquelle :
- R¹ est choisi parmi un aryle comprenant 5 à 10 atomes, de préférence un groupe phényle, et une chaîne alkyle linéaire, ramifiée ou cyclique comprenant de 2 à 10 atomes de carbone, ladite chaîne alkyle étant éventuellement interrompue par un oxygène et ladite chaîne alkyle et ledit aryle portant au moins un groupe G choisi parmi un halogène, un groupe -NH₂, un groupe -SH, un groupe époxy, un groupe hydroxyle -OH et un groupe méthacrylate -OOC-C(CH₃)=CH₂, et
- R² représente un alkyle comprenant de 1 à 4 atomes de carbone, de préférence un méthyle ou un éthyle.

5. Procédé selon l'une quelconque des revendications 1 à 4, dans lequel, à l'étape a), une cire est mélangée avec les particules P_{TiO2}, les particules P_{ZnOZnP} et éventuellement les particules P_{F}, et dans lequel ladite cire comprend des groupes ammonium quaternaire, ladite cire étant obtenue à partir de :
- une amine tertiaire,
- une amine grasse ou un diéthanolamide d'acide gras, et
- un acide gras ou un ester gras.

6. Particules P_{µ} pouvant être obtenues par le procédé selon l'une quelconque des revendications 1 à 5.

7. Utilisation des particules P_{µ} selon la revendication 6 pour conférer des propriétés autonettoyantes et antimicrobiennes à une pièce plastique comprenant une matrice thermoplastique.

8. Pièce plastique comprenant les particules P_{µ} selon la revendication 6 dispersées dans une matrice thermoplastique.

9. Pièce plastique selon la revendication 8, dans laquelle le thermoplastique de la matrice thermoplastique est le polypropylène ou le poly(chlorure de vinyle).

10. Utilisation de la pièce plastique selon la revendication 8 ou 9 en tant que pièce de garniture intérieure.

## Patentansprüche

1. Verfahren zur Herstellung von P_{µ}-Partikeln, umfassend die Schritte bestehend aus:
a) Mischen:
- von P_{TiO2}-Partikeln, umfassend ein Polysiloxanpolymer, umfassend mindestens eine Polysiloxankette, die kovalent an TiO₂-Nanopartikel gebunden ist, wobei die P_{TiO2}-Partikel aus einem Alkoxysilan und einem Titanalkoxid erlangt werden, mit
- P_{ZnOZnP}-Partikeln, umfassend ein Polysiloxanpolymer, umfassend mindestens eine Polysiloxankette, die kovalent an Nanopartikel gebunden ist, umfassend einen Verbundstoff aus ZnO und Zinkpyrithion, wobei die P_{ZnOZnP}-Partikel aus einem Alkoxysilan, Zinkacetat und Zinkpyrithionpartikeln erlangt werden,
um ein Gemisch zu erlangen,
b) Leiten des Gemischs über ein Sieb, um P_{µ}-Partikel zu erlangen, die eine Korngrößenverteilung gemessen durch Laserbeugung aufweisen, wobei der mittlere Volumendurchmesser D_{v50µ} 1,0 bis 5,0 µm ist und der Volumendurchmesser D_{v10µ} mindestens 0,1 µm ist.

2. Verfahren nach Anspruch 1, wobei in Schritt a) P_{F}-Partikel mit den P_{TiO2}-Partikeln und den P_{ZnOZnP}-Partikeln gemischt werden, und wobei die P_{F}-Partikel ein Polysiloxanpolymer umfassen, umfassend mindestens eine Polysiloxankette, die kovalent an Fluoralkylgruppen und Siliciumdioxidpartikel gebunden ist, wobei die P_{F}-Partikel aus einem Fluoralkylalkoxysilan und Siliciumdioxidnanopartikeln erlangt werden.

3. Verfahren nach Anspruch 1 oder 2, wobei:
- der mittlere Volumendurchmesser D_{v50TiO2}, gemessen durch Laserbeugung, der in Schritt a) verwendeten P_{TiO2}-Partikel 0,6 bis 12,0 µm, insbesondere 2,0 bis 10,0 µm, wie beispielsweise 4,0 bis 8,0 µm, ist, und/oder
- der mittlere Volumendurchmesser D_{v50ZnOZnP}, gemessen durch Laserbeugung, der in Schritt a) verwendeten P_{ZnOZnP}-Partikel 0,3 bis 10,0 µm, insbesondere 1,0 bis 7,0 µm, wie beispielsweise 2,0 bis 6,0 µm, ist, und/oder
- der mittlere Durchmesser, gemessen durch dynamische Lichtstreuung der optional in Schritt a) verwendeten P_{F}-Partikel 10 bis 100 nm ist.

4. Verfahren nach einem der Ansprüche 1 bis 3, wobei die P_{TiO2}-Partikel und/oder die P_{ZnOZnP}-Partikel aus einem Alkoxysilan folgender Formel (I) erlangt werden:
R¹-Si(OR)₃ (I)
wobei:
- R¹ ausgewählt ist aus einem Aryl, umfassend 5 bis 10 Atome, vorzugsweise einer Phenylgruppe, und einer geradkettigen, verzweigten oder cyclischen Alkylkette umfassend 2 bis 10 Kohlenstoffatome, wobei die Alkylkette optional von einem Sauerstoff unterbrochen ist und die Alkylkette und das Aryl mindestens eine Gruppe G tragen, die ausgewählt ist aus einem Halogen, einer Gruppe -NH₂, einer Gruppe -SH, einer Epoxygruppe, einer Hydroxylgruppe -OH und einer Methacrylatgruppe - OOC-C(CH₃)=CH₂, und
- R² ein Alkyl darstellt, umfassend 1 bis 4 Kohlenstoffatome, vorzugsweise ein Methyl oder ein Ethyl.

5. Verfahren nach einem der Ansprüche 1 bis 4, wobei in Schritt a) ein Wachs mit den P_{TiO2}-Partikeln, den P_{ZnOZnP}-Partikeln und optional den P_{F},-Partikeln gemischt wird, und wobei das Wachs quaternäre Ammoniumgruppen umfasst, wobei das Wachs erlangt wird aus Folgendem:
- einem tertiären Amin,
- einem Fettamin oder einem Fettsäurediethanolamid, und
- einer Fettsäure oder einem Fettsäureester.

6. P_{µ}-Partikel, die durch das Herstellungsverfahren nach einem der Ansprüche 1 bis 5 erlangt werden können.

7. Verwendung von P_{µ}-Partikeln nach Anspruch 6, um einem Kunststoffteil, das eine thermoplastische Matrix umfasst, selbstreinigende und antimikrobielle Eigenschaften zu verleihen.

8. Kunststoffteil, umfassend die P_{µ}-Partikel nach Anspruch 6, dispergiert in einer thermoplastischen Matrix.

9. Kunststoffteil nach Anspruch 8, wobei der Thermoplast in der thermoplastischen Matrix Polypropylen oder Poly(vinylchlorid) ist.

10. Verwendung des Kunststoffteils nach Anspruch 8 oder 9 als Innenverkleidungsteil.

## Claims

1. A process for the preparation of P_{µ} particles comprising the steps of:
a) mixing:
- P_{TiO2} particles comprising a polysiloxane polymer comprising at least one polysiloxane chain covalently bonded to T_{iO2} nanoparticles, said P_{TiO2} particles being obtained from an alkoxysilane and a titanium alkoxide, with
- P_{ZnOZnP} particles comprising a polysiloxane polymer comprising at least one polysiloxane chain covalently bound to nanoparticles comprising a composite of ZnO and zinc pyrithione, said P_{ZnOZnP} particles being obtained from an alkoxysilane, zinc acetate and zinc pyrithione particles,
to obtain a mixture,
b) passing the mixture over a sieve to obtain P_{µ} particles having a volume distribution of particle size, as measured by laser diffraction, in which the volume median diameter D_{V50µ} is from 1.0 to 5.0 µm and the volume diameter D_{v10µ} is at least 0.1 µm.

2. A method according to claim 1, wherein in step a) P_{F} particles are mixed with the P_{TiO2} particles and P_{ZnOZnP}, particles and in which the P_{F} particles comprise a polysiloxane polymer comprising at least one polysiloxane chain covalently bonded to fluoroalkyl groups and to silicon dioxide particles, said P_{F} particles being obtained from a fluoroalkylalkoxysilane and silicon dioxide nanoparticles.

3. Method according to claim 1 or 2, wherein:
- the volume median diameter D_{v50TiO2}, as measured by laser diffraction of the P_{TiO2} particles used in step a), is from 0.6 to 12.0 µm, in particular from 2.0 to 10.0 pm, such as from 4.0 to 8.0 µm, and/or
- the volume median diameter D_{V50ZnoZnP}, as measured by laser diffraction of the P_{ZnOZnP} particles used in step a), is from 0.3 to 10.0 µm, in particular from 1.0 to 7.0 µm, such as from 2.0 to 6.0 µm, and/or
- the average diameter, as measured by dynamic light scattering of any P_{F} particles used in step a), is 10 to 100 nm.

4. Method according to any one of claims 1 to 3, wherein the P_{TiO2} particles and/or P_{ZnOZnP} particles are obtained from an alkoxysilane of formula (I):
R¹-Si(OR)₃ (I)
in which:
- R¹ is selected from an aryl comprising 5 to 10 atoms, preferably a phenyl group, and a linear, branched or cyclic alkyl chain comprising 2 to 10 carbon atoms, said alkyl chain being optionally interrupted by an oxygen and said alkyl chain and said aryl carrying at least one group G selected from a halogen, an -NH₂ group, an -SH group, an epoxy group, a hydroxyl group -OH and a methacrylate group -OOC-C(CH₃)=CH₂, and
- R² represents an alkyl comprising 1 to 4 carbon atoms, preferably methyl or ethyl.

5. Method according to any one of claims 1 to 4, wherein in step a) a wax is mixed with the P_{TiO2} particles, the P_{ZnOZnP} particles and possibly the P_{F} particles, and wherein said wax comprises quaternary ammonium groups, said wax being obtained from:
- a tertiary amino,
- a fatty amino or fatty acid diethanolamide, and
- a fatty acid or a fatty ester.

6. P_{µ} particles able to be obtained by the process according to any one of claims 1 to 5.

7. Use of the P_{µ} particles of claim 6 to impart self-cleaning and antimicrobial properties to a plastic part comprising a thermoplastic matrix.

8. A plastic part comprising the P_{µ} particles of claim 6 dispersed in a thermoplastic matrix.

9. A plastic part according to claim 8, wherein the thermoplastic of the thermoplastic matrix is polypropylene or polyvinyl chloride.

10. Use of the plastic part according to claim 8 or 9 as an interior trim part.
